# EUROPEAN PATENT SPECIFICATION

(11) **EP 3 775 336 B1**
(45) Date of publication and mention of the grant of the patent: **23.11.2022**
(21) Application number: 19715278.8
(22) Date of filing: 04.03.2019
(51) Int. Cl.: D01D 5/34, D01F 1/10, D01F 8/06, D01F 8/14

(54) **BICOMPONENT FIBER AND POLYMER COMPOSITION THEREOF**
ZWEIKOMPONENTIGE FASER UND POLYMERZUSAMMENSETZUNG DARAUS
FIBRE À DEUX COMPOSANTS ET COMPOSITION POLYMÈRE ASSOCIÉE

(30) Priority: 29.03.2018 US 201862649977 P
(43) Date of publication of application: 17.02.2021
(73) Proprietor: Dow Global Technologies LLC, Midland, MI 48674 (US)
(72) Inventor: ARTEAGA LARIOS, Fabricio, Lake Jackson, TX 77566 (US); WALTHER, Brian W., Freeport, TX 77566 (US); MARTIN, Jill M., Freeport, TX 77566 (US); WEVERS, Ronald, 4530 Terneuzen (NL); BELL, Robert W., Freeport, TX 77566 (US)
(74) Representative: Boult Wade Tennant LLP
(86) International application number: PCT/US2019/020552
(87) International publication number: WO 2019/190705

(56) References cited:
- EP-A1- 0 773 311
- EP-A1- 1 724 379
- EP-B1- 0 773 311
- EP-B1- 1 724 379
- US-A- 5 372 885
- US-A1- 2007 173 161

## Description

### Technical Field

The present disclosure relates generally to a fiber and more particularly to polymer compositions for a bicomponent fiber.

### Background

Bicomponent fibers are filaments made up of two different polymers that are extruded from the same spinneret with both polymers contained within the same filament. When the filament leaves the spinneret, it consists of non-mixed components that are fused at the interface. The two polymers differ in their chemical composition and/or physical property, which allows the bicomponent fiber to meet a wider variety of desired properties as the functional properties of both polymers can be joined into one filament.

Examples of bicomponent fibers can be found in the following documents: US2007/173161, US Pat. No. 5,981,410; US Pat. No.; US Pat. No. 5,948,529; US Pat. No. 4,966,810; US Pat. No. 4,966,810; US Pat. No. 4,950,541; EP Patent #0496734 B1; Advances in polyolefin-based fibers for hygienic and medical applications (R.M. Patel, J. Martin, The Dow Chemical Company, USA; Polyolefin Fibres, Industrial and Medical Applications, 2009, pp. 154-182); and M. Ahmed, Polypropylene Fibers Science and Technology (New York: Elsevier Scientific Pub. Co., 1982) (CHAPTER XI) R. Jeffries, Bicomponent Fibers (Morrow Publishing Co. Ltd., London 1971).

Among the many configurations of bicomponent fibers, one very useful configuration is a core-sheath bicomponent fiber. For the core-sheath structure the core is fully surrounded by the sheath. So, a first polymer forms the core while a second polymer different than the first polymer forms the sheath. This allows for a variety of properties to be achieved from a single fiber structure. For example, the polymer for the core can be selected to impart strength to the bicomponent fiber (a reinforcing polymer), while the polymer for the sheath can be selected for its ability to be dyed, for it appearance, for its ability to provide insulation or for its adhesion properties, among others.

One issue that continues to trouble bicomponent fibers having a core-sheath structure, however, is the strength of the interfacial bond between the polymer of the core and the polymer of sheath. Experience has shown that core-sheath adhesion is a problem with bicomponent fibers having a core of polyethylene terephthalate (PET) and a sheath of a polyolefin. This is not surprising since PET and many polyolefins (e.g., polypropylene, polyethylene) are mutually incompatible. This incompatibility can lead to problems such as shedding of the sheath during carding. It is also possible for the core of PET to separate from the sheath of polyolefin during the post-spinning process steps.

As such, there remains in the art a need for improving the adhesion of a core of PET to a sheath of a polyolefin.

### Summary

The present disclosure provides for a bicomponent fiber that helps to improve the strength of the interfacial bond between the layers for the bicomponent fiber. For the various embodiment provided herein, the bicomponent fiber includes a condensation polymer (e.g., a polyester) in of a first region (e.g., the core) and a polyolefin blend in a second region (e.g., the sheath) of the bicomponent fiber, where the strength of the interfacial bond between the layers for the bicomponent fiber can be improved by the presence of a maleic anhydride-grafted polypropylene. For bicomponent fibers having polymers that suffer from incompatibility problems (e.g., PET core with polyolefin sheath), the present disclosure can help to improvement in the adhesion of the core to the sheath.

Specifically, the present disclosure provides for a bicomponent fiber that includes a first region formed of a condensation polymer, and a second region formed from a polypropylene blend. The polypropylene blend includes (i) an propylene-based polymer having a density of 0.895 g/cm³ to 0.920 g/cm³ and a melt index, I2, as determined by ASTM D1238 at 230 °C and 2.16 kg of 0.5 to 150 g/10 minutes; (ii) a maleic anhydride-grafted polypropylene; and (iii) an inorganic Brønsted-Lowry acid having an acid strength pKa value at 25 °C of 1 to 6.5, wherein the polypropylene blend has a 0.03 to 0.3 weight percent of grafted maleic anhydride based on the total weight of the polypropylene blend. For the various embodiments, the first region is a core region of the bicomponent fiber and the second region is a sheath region of the bicomponent fiber, where the sheath region surrounds the core region.

For the various embodiments, the condensation polymer is selected from the group consisting of polyethylene terephthalate, polyethylene terephthalate glycol-modified, polybutylene terephthalate, polylactic acid, polytrimethylene terephthalate, polyethylene 2,5-furandicarboxylate, polyhydroxybutyrate, polyamide and combinations thereof. In a preferred embodiment, the condensation polymer is selected from the group consisting of polyethylene terephthalate, polyethylene terephthalate glycol-modified, polybutylene terephthalate and combinations thereof. For the various embodiments, the condensation polymer comprises at least 75 weight percent (wt.%) of the first region, wherein the wt.% is based on the total weight of the first region.

For the various embodiments, the propylene-based polymer is selected from a homopolymer, a block-copolymer, a random copolymer and combinations thereof. The maleic anhydride-grafted polypropylene has 0.05 to 3 wt.% of graphed maleic anhydride based on the total weight of the maleic anhydride-grafted polypropylene. For the various embodiments, the maleic anhydride-grafted polypropylene has a density in a range of 0.895 g/cm³ to 0.920 g/cm³ and a melt index, I2, as determined by ASTM D1238 at 230 °C and 2.16 kg of 0.5 to 500 g/10 minutes. Preferably, the maleic anhydride-grafted polypropylene has a density in a range of 0.899 g/cm³ to 0.914 g/cm³ and a melt index, I2, as determined by ASTM D1238 at 230 °C and 2.16 kg of 20 to 25 g/10 minutes.

For the various embodiments, the inorganic Brønsted-Lowry acid is selected from the group consisting of sodium bisulfate monohydrate, phosphoric acid and combinations thereof. Preferably, the inorganic Brønsted-Lowry acid has a pKa of 2 to 6.

By way of more specific examples, the polypropylene blend includes 5 to 75 wt.% of the propylene-based polymer, 2 to 30 wt.% of the maleic anhydride-grafted polypropylene, and 20 to 10000 parts-per-million of the inorganic Brønsted-Lowry. The polypropylene blend can also include at least 75 wt.% of the propylene-based polymer, where the maleic anhydride-grafted polypropylene and the inorganic Brønsted-Lowry acid are present with the propylene-based polymer to provide 100 wt.% of the polypropylene blend.

The polypropylene blend can further include a polar saturated fatty acid having a 12 to 21 carbon chain and metal salts thereof. For the various embodiments, the polar saturated fatty acid can include stearic acid and metal salts thereof.

The present disclosure also provides for a method of forming the bicomponent fiber, which includes coextruding under thermally bonding conditions (a) the condensation polymer and (b) the polypropylene blend, where the polypropylene blend includes (i) an propylene-based polymer having a density of 0.985 g/cm³ to 0.920 g/cm³ and a melt index, I2, as determined by ASTM D1238 at 230 °C and 2.16 kg of 0.5 to 150 g/10 minutes; (ii) a maleic anhydride-grafted polypropylene; and (iii) an inorganic Brønsted-Lowry acid having an acid strength pKa value at 25 °C of 1 to 6.5. The polypropylene blend has a 0.03 to 0.3 weight percent of grafted maleic anhydride based on the total weight of the polypropylene blend. The condensation polymer and the polypropylene blend are contacted under thermally bonding conditions to form the bicomponent fiber having a first region with the condensation polymer and a second region with the polypropylene blend.

In one embodiment, the bicomponent fiber is prepared by coextruding (a) and (b) in a sheath/core configuration, and where (a) is selected from the group consisting of polyethylene terephthalate, polyethylene terephthalate glycol-modified, polybutylene terephthalate, polylactic acid, polytrimethylene terephthalate, polyethylene 2,5-furandicarboxylate, polyhydroxybutyrate, polyamide and combinations thereof, and where the maleic anhydride-grafted polypropylene of the polypropylene blend has 0.05 to 3 wt.% of graphed maleic anhydride based on the total weight of the maleic anhydride-grafted polypropylene. The polypropylene blend can include 5 to 75 wt.% of the propylene-based polymer, 2 to 30 wt.% of the maleic anhydride-grafted polypropylene, and 20 to 10000 parts-per-million of the inorganic Brønsted-Lowry. The polypropylene blend can further include a polar saturated fatty acid having a 12 to 21 carbon chain and metal salts thereof.

The bicomponent fiber can be formed under melt spinning, melt blown, spunbond or staple fiber manufacturing process conditions. The present disclosure also provides for a nonwoven article that includes the bicomponent fiber described herein.

### Detailed Description

The present disclosure provides for a bicomponent fiber that helps to improve the strength of the interfacial bond between the layers for the bicomponent fiber. For the various embodiment provided herein, the bicomponent fiber includes a condensation polymer (e.g., a polyester) in of a first region (e.g., the core) and a polyolefin blend in a second region (e.g., the sheath) of the bicomponent fiber, where the strength of the interfacial bond between the layers for the bicomponent fiber can be improved by the presence of a maleic anhydride-grafted polypropylene. For bicomponent fibers having polymers that suffer from incompatibility problems (e.g., PET core with polyolefin sheath), the present disclosure can help to improvement in the adhesion of the core to the sheath.

As discussed herein, the present disclosure is directed to bicomponent fibers, a method of producing bicomponent fibers, nonwoven materials comprising one or more such bicomponent fibers, and a method for making such nonwoven materials. The bicomponent fibers according to the present disclosure include a first region formed of a condensation polymer, and a second region formed from a polypropylene blend. The polypropylene blend includes (i) an propylene-based polymer having a density of 0.895 g/cm³ to 0.920 g/cm³ and a melt index, I2, as determined by ASTM D1238 at 230 °C and 2.16 kg of 0.5 to 150 g/10 minutes; (ii) a maleic anhydride-grafted polypropylene; and (iii) an inorganic Brønsted-Lowry acid having an acid strength pKa value at 25 °C of 1 to 6.5, where the polypropylene blend has a 0.03 to 0.3 weight percent of grafted maleic anhydride based on the total weight of the polypropylene blend.

The bicomponent fibers of the present disclosure can contain the different polymer portions in any shape. Examples are core- sheath, side-by-side or island-in-the-sea configurations. Core-sheath configurations are preferred. The bicomponent fibers of the present disclosure can have a cross- section of either shape. Examples of cross sections are found in Hearle J., "Fibers, 2. Structure" (Ullmann's Encyclopedia of Industrial Chemistry, Wiley-VCH: 2002, 1-85). Examples of preferred cross-sections are circular, ellipsoidal, tri- or multiangled or tri- or multilobal. So, for the various embodiments, the first region can be a core region of the bicomponent fiber and the second region can be a sheath region of the bicomponent fiber, where the sheath region surrounds the core region. Other configurations for the biocomponent fiber as possible, as discussed herein. Specifically, the present disclosure refers to a "core" and "sheath" bicomponent fibers. The core and sheath bicomponent fibers of the present disclosure can be in a concentric configuration or an eccentric configuration, where the sheath completely surrounds the core. The bicomponent fibers of the present disclosure can also have a segmented pie configuration is known in the art. Other possible configurations include side-by-side bicomponent fiber configurations as are known.

As used herein, the term "copolymer" is meant to include polymers having two or more monomers, optionally with other monomers, and may refer to interpolymers, terpolymers, etc. The term "polymer" as used herein includes, but is not limited to, homopolymers, copolymers, terpolymers, etc. and alloys and blends thereof. The term "polymer" as used herein also includes impact, block, graft, random and alternating copolymers. The term "polymer" shall further include all possible geometrical configurations unless otherwise specifically stated. Such configurations may include isotactic, syndiotactic and random symmetries. The term "blend" as used herein refers to a mixture of two or more polymers.

The term "monomer" or "comonomer" as used herein can refer to the monomer used to form the polymer, i.e., the unreacted chemical compound in the form prior to polymerization, and can also refer to the monomer after it has been incorporated into the polymer, also referred to herein as a "[monomer]-derived unit", which by virtue of the polymerization reaction typically has fewer hydrogen atoms than it does prior to the polymerization reaction. Different monomers are discussed herein, including propylene monomers, ethylene monomers, and diene monomers.

"Polypropylene-based polymer" as used herein includes homopolymers and copolymers (block copolymer or random copolymer) of propylene or mixtures thereof. Homopolymers of the polypropylene-based polymer include only propylene (e.g., 100 wt.% propylene), whereas copolymers of the polypropylene-based polymer include an α-olefin comonomer and greater than 50 wt.% propylene, where the wt.% is based on the total weight of the polypropylene-based polymer. Preferred α-olefins include, but are not limited to, C₂ and C₄-C₁₂ α-olefins, and preferably C₂ and C₄-C₁₀ α-olefins. More preferred α-olefins include ethylene, 1-butene, 1-pentene, 1-hexene, 1-heptene and 1-octene, 1-decene, further include propylene, 1-butene, 1-hexene and 1-octene, and further 1-butene, 1-hexene and 1-octene.

"Maleic anhydride-grafted polypropylene" as used herein includes a propylene polymer having 0.05 to 3 wt.% of graphed maleic anhydride based on the total weight of the maleic anhydride-grafted polypropylene. The propylene polymer includes any polymer comprising propylene, either alone or in combination with one or more comonomers, in which propylene is the major component (e.g., greater than 50 wt.% propylene).

Likewise, "ethylene-based", as used herein, is meant to include any polymer comprising ethylene, either alone or in combination with one or more comonomers, in which ethylene is the major component (e.g., greater than 50 wt.% ethylene).

### First Region

The bicomponent fiber includes a first region formed of a condensation polymer. As discussed herein, the first region can be a core region of the bicomponent fiber and the second region can be a sheath region of the bicomponent fiber, where the sheath region surrounds the core region. Polymers intended for the first region of the bicomponent fiber described herein include condensation polymers, which are polymers formed through a condensation reaction. Examples of such condensation polymers include melt-spinnable condensation polymers, which include those selected from the group consisting of polyethylene terephthalate, polyethylene terephthalate glycol-modified, polybutylene terephthalate, polylactic acid, polytrimethylene terephthalate, polyethylene 2,5-furandicarhoxylate, polyhydroxybutyrate, polyamide and combinations thereof.

As seen above, the broad class of condensation polymers include polyesters, which are preferred for the first region of the biocomponent fiber. Preferably, the condensation polymer are polyesters selected from the group consisting of polyethylene terephthalate, polyethylene terephthalate glycol-modified, polybutylene terephthalate and combinations thereof. Preferably, the polyesters have a density in a range of 1.2 g/cm³ to 1.5 g/cm³. Most preferably, the polyesters have a density in a range of 1.35 g/cm³ to 1.45 g/cm³. Such polyesters normally have a molecular weight equivalent to an intrinsic viscosity (IV) of 0.5 to 1.4 (dl/g), where the VI is determined according to ASTM D4603 or 2857.

For the various embodiment, the condensation polymer can comprise at least 75 weight percent (wt.%) of the first region, wherein the wt.% is based on the total weight of the first region. When less than 100 wt.% of the identified preferred polyesters recited above are used for the first region (e.g., polyethylene terephthalate), the remaining wt.% to achieve the 100 wt.% can be composed of, for example, dicarbonic acid units and glycol units which act as so-called modifiers and which enable the physical and chemical properties of the fiber produced to be influenced in a specific manner. Examples of such dicarbonic acid units are residues of isophthalic acid or of aliphatic dicarbonic acid, e.g. glutaric acid, adipinic acid, sabacic acid; examples of diol residues with a modifying action are those of longer chain diols, e.g. of propane diol or butane diol, of di- or triethylene glycol or, if available in a small quantity, of polyglycol with a molecular weight of 500 to 2000 g/mol. Particularly preferable for the first region are polyesters that contain at least 95 mol % of polyethylene terephthalate, particularly those of unmodified polyethylene terephthalate. Processing temperatures for forming the core from the polyesters, as discussed herein, can be from 200 °C to less than 350 °C.

Examples of commercially available condensation polymers include NatureWorks from Cargill Dow (a polylactic acid) and LACEA^{®} from Mitsui Chemical. Examples also include diacid/diol aliphatic polyesters sold under the tradename BIONOLLE^{™} 1000 and BIONOLLE^{™} 3000 (polybutylene succinate/adipate copolymers) from the Showa High Polymer Company, Ltd. (Tokyo, Japan). Examples of aliphatic/aromatic copolyester include poly(tetramethylene adipate-co-terephthalate) available under the tradename EASTAR^{™} BIO Copolyester from Eastman Chemical or ECOFLEX^{®} from BASF.

### Second Region

The second region of the bicomponent fiber is formed from a polypropylene blend of (i) an propylene-based polymer having a density of 0.895 g/cm³ to 0.920 g/cm³ and a melt index, I2, as determined by ASTM D1238 at 230 °C and 2.16 kg of 0.5 to 150 g/10 minutes; (ii) a maleic anhydride-grafted polypropylene; and (iii) an inorganic Brønsted-Lowry acid having an acid strength pKa value at 25 °C of 1 to 6.5, wherein the polypropylene blend has a 0.03 to 0.3 weight percent of grafted maleic anhydride based on the total weight of the polypropylene blend. Density values are measured according to ASTM D-792.

### Propylene-based polymer

The propylene-based polymer can be selected from a homopolymer, a block-copolymer, a random copolymer and combinations thereof, where copolymer includes one or more comonomers. The propylene-based polymer can include greater than 50 wt.% propylene and, when present, one or more comonomers selected from C₂ and C₄ to C₁₂ α-olefins, where the combination of the propylene and the one or more comonomers, if present, provides for 100 wt.% of the propylene-based polymer. In one or more embodiments, the α-olefin comonomer units may derive from ethylene, 1-butene, 1-pentene, 1-hexene, 4-methyl-1-pentene, 1-octene, 1-decene and combinations thereof. Potential propylene based polymers are also described in US Pat. No. 9,322,114.

Examples of commercially available propylene-based polymers include those available under the tradename ACHIEVE^{™}, available from the ExxonMobil Chemical Company (Houston, TX, USA). Basell Profax PH-835 (a 35 melt flow rate Ziegler-Natta isotactic polypropylene from LyondellBasell), Basell Metocene MF-650W (a 500 melt flow rate metallocene isotactic polypropylene from LyondellBasell), Exxon Achieve^{™} 3854 (a 25 melt flow rate metallocene isotactic polypropylene from Exxon-Mobil Chemical), and Mosten^{®} NB425 (a 25 melt flow rate Ziegler-Natta isotactic polypropylene from Unipetrol). Examples include ACHIEVE^{™} 3854. The propylene-based polymer as provided herein also has a melt index, I2, as determined by ASTM D1238 at 230 °C and 2.16 kg of 0.5 to 150 g/10 minutes. Preferably, the propylene-based polymer has a melt index, I2, from 5 to 100 g/10 minutes, as determined by ASTM D1238 at 230 °C and 2.16 kg. Most preferably, the propylene-based polymer has a melt index, I2, from 10 to 50 g/10 minutes, as determined by ASTM D1238 at 230 °C and 2.16 kg.

### Maleic anhydride-grafted polypropylene

The maleic anhydride-grafted polypropylene may be a propylene homopolymer and/or a propylene copolymer that includes one or more comonomers. The maleic anhydride-grafted polypropylene can include greater than 50 wt.% propylene and, when present, one or more comonomers selected from C₂ and C₄ to C₁₂ α-olefins, where the combination of the propylene and the one or more comonomers, if present, along with the maleic anhydride provides for 100 wt.% of the maleic anhydride-grafted polypropylene. In one or more embodiments, the α-olefin comonomer units may derive from ethylene, 1-butene, 1-pentene, 1-hexene, 4-methyl-1-pentene, 1-octene, 1-decene, and combinations thereof.

The maleic anhydride-grafted polypropylene according to the instant disclosure can have a density in the range of 0.895 to 0.920 g/cm³. All individual values and subranges from 0.895 to 0.920 g/cm³ are included herein and disclosed herein; for example, the density can be from a lower limit of 0.895, 0.896, 0.897, 0.898, or 0.899 g/cm³ to an upper limit of 0.905, 0.907, 0.909, 0.912, 0.915 or 0.920 g/cm³. For example, the maleic anhydride-grafted polypropylene may have a density in the range of 0.897 to 0.915 g/cm³; or in the alternative, the maleic anhydride-grafted polypropylene may have a density in the range of 0.899 to 0.905 g/cm³.

In a preferred embodiment, the maleic anhydride-grafted polypropylene has a density in a range of 0.895 g/cm³ to 0.920 g/cm³ and a melt index, I2, as determined by ASTM D1238 at 230 °C and 2.16 kg of 0.5 to 500 g/150 minutes. All individual values and subranges from .5 to 500 g/10 minutes are included herein and disclosed herein; for example, the melt index (12) can be from a lower limit of 5, 10, 15, 20 or 25 g/10 minutes, to an upper limit of 500, 300, 100, 80 or 50 g/10 minutes. For example, the maleic anhydride-grafted polypropylene can have a melt index (12) in the range of 5 to 50 g/10 minutes; or in the alternative, the maleic anhydride-grafted polypropylene can have a melt index (12) in the range of 20 to 300 g/10 minutes. More preferably, the maleic anhydride-grafted polypropylene has a density in a range of 0.899 g/cm³ to 0.914 g/cm³ and a melt index, I2, as determined by ASTM D1238 at 230 °C and 2.16 kg of 20 to 25 g/10 minutes.

The maleic anhydride-grafted polypropylene is graphed (e.g., "functionalized") with maleic anhydride. As used herein, the term "grafted" denotes a covalent bonding of the grafting monomer (maleic anhydride) to polymer chains of the polypropylene-based polymer. For the embodiments herein, the maleic anhydride-grafted polypropylene has 0.05 to 3 wt.% of graphed maleic anhydride based on the total weight of the maleic anhydride-grafted polypropylene. Maleic anhydride functionality can be incorporated into the polymer by grafting or other reaction methods. When grafting, the level of maleic anhydride incorporation is typically 10 percent or below by weight based on the weight of the polymer. Examples of commercially available maleic anhydride functionalized polypropylene include those available under the tradename EXXELOR^{™}, available from the ExxonMobil Chemical Company (Houston, TX, USA). Examples include EXXELOR^{™} PO 1015, EXXELOR^{™} PO 1020, EXXELOR^{™} PO. Other examples of maleic anhydride functionalized polypropylenes include those sold under the tradename FUSABOND^{™}, available from E.I. du Pont de Nemours and Company (Wilmington, DE, USA) such as FUSABOND^{®} P613 and FUSABOND^{®} P353, among others. Other maleic anhydride functionalized polypropylene polymers, copolymers, and terpolymers may include POLYBOND^{™} available from Chemtura Corporation (Middlebury, CT, USA), such as POLYBOND^{™} 3150 and POLYBOND^{™} 3200, among others; OREVAC^{™} available from Arkema Group (Colobes, France), such as OREVAC^{™} 18707 and OREVAC^{™} 18729, among others; PLEXAR^{™} LyondellBasell Industries (Houston, TX, USA), such as PLEXAR^{™} PX-6002 and PLEXAR^{™} PX-6006; also grades available under the tradename YPAREX^{™} from B.V. DSM Engineering Plastics (Heerlen, the Netherlands), such as YPAREX^{™} oHo2.

### Inorganic Brønsted-Lowry Acid

The polypropylene blend further includes an inorganic Brønsted-Lowry acid having an acid strength pKa value at 25 °C of 1 to 6.5. Preferably, the inorganic Brønsted-Lowry acid has a pKa of 2 to 6. Also preferably, the inorganic Brønsted-Lowry acid is selected from the group consisting of sodium bisulfate monohydrate, phosphoric acid and combinations thereof.

The polypropylene blend of the present disclosure has 0.03 to 0.3 weight percent of grafted maleic anhydride based on the total weight of the polypropylene blend. In a preferred embodiment, the polypropylene blend includes 5 to 75 wt.% of the propylene-based polymer, 2 to 30 wt.% of the maleic anhydride-grafted polypropylene, and 20 to 10000 parts-per-million of the inorganic Brønsted-Lowry. In another preferred embodiment, the polypropylene blend includes at least 75 wt.% of the propylene-based polymer, where the maleic anhydride-grafted polypropylene and the inorganic Brønsted-Lowry acid are present with the propylene-based polymer to provide 100 wt.% of the polypropylene blend. Processing temperatures for forming the sheath from the polypropylene blend of the present disclosure can be from 120 °C to less than 171 °C.

The polypropylene blend of the present disclosure can also include a variety of additives, depending upon the intended purpose. For example, the polypropylene blend of the present disclosure can further include a polar saturated fatty acid having a 12 to 21 carbon chain and metal salts thereof. Examples of such polar saturated fatty acids include stearic acid and metal salts thereof. Other additives include, but are not limited to, stabilizers, antioxidants, fillers, colorants, slip agents, fire retardants, plasticizers, pigments, processing aids, tackifying resins and the like. Other additives may include fillers and/or reinforcing materials, such as carbon black, clay, talc, calcium carbonate, mica, silica, silicate, combinations thereof, and the like.

### Preparation of Bicomponent Fibers and Fabrics

Bicomponent fibers according to the instant disclosure may be produced via different techniques. Such techniques for forming the bicomponent fiber and products of the biocomponent fiber include melt spinning, a melt blown process, a spunbond process, a staple process, a carded web process, an air laid process, a thermo-calendering process, an adhesive bonding process, a hot air bonding process, a needle punch process, a hydroentangling process and an electrospinning process, where the bicomponent fiber is formed under any of these manufacturing process conditions. Using such manufacturing techniques, the bicomponent fibers of the present disclosure can be formed into a variety of fabrics for a wide variety of potential applications. Fabrics according to instant disclosure include, but are not limited to, non-woven fabrics, woven fabrics, and combination thereof.

As used herein, "non-woven" fabrics refer to textile materials that have been produced by methods other than weaving. For example, for the non-woven fabrics the bicomponent fibers are processed directly into a planar sheet-like fabric structure and are then bonded chemically, thermally and/or interlocked mechanically to achieve a cohesive fabric. The non-woven fibers and fabrics of the present disclosure can be formed by any method known in the art, such as those mentioned above. Preferably, the non-woven fibers are produced by a meltblown or spunbond process.

The biocomponent fibers of the present disclosure may also be employed in conventional textile processing such as carding, sizing, weaving and the like. Woven fabrics made from the bicomponent fibers of the present invention may also be heat treated to alter the properties of the resulting fabric.

As noted above, a melt spinning process can be used to manufacture the biocomponent fibers. In the melt spinning process, the components used for manufacturing the bicomponent fiber according to the present disclosure are independently melted in an extruder and each of the condensation polymer and the polypropylene blend in their molten state are coextruded under thermally bonding conditions through a spinneret with bi-component fiber spinning nozzles constructed to extrude the molten polymers in such a manner as to form a desired structure, e.g. core-sheath. The extrusion of each polymer through a die to form the bicomponent fiber is accomplished using convention equipment such as, for example, extruders, gear pumps and the like. It is preferred to employ separate extruders, which feed gear pumps to supply the separate molten polymer streams of the bicomponent fiber to the die where the condensation polymer and the polypropylene blend are contacted under thermally bonding conditions to form the bicomponent fiber having a first region with the condensation polymer and a second region with the polypropylene blend. Thermally bonding conditions include operating the extruders for each of the separate molten polymer streams at a temperature of 200 °C to less than 350 °C for the polyester used to form the core, and at a temperature of 120 °C to less than 171 °C for the polypropylene blend used to form the sheath for the bicomponent fiber of the present disclosure. The polypropylene blend according to the present disclosure is preferably mixed in a mixing zone of the extruder and/or in a static mixer, for example, upstream of the gear pump to obtain a more uniform dispersion of the polymer components.

Following extrusion through the die, the bicomponent fiber is taken up in solid form on a godet or another take-up surface. In a bicomponent staple fiber forming process, the bicomponent fibers are taken up on a godet that draws down the fibers in proportion to the speed of the take-up godet. In the spunbond process, the bicomponent fibers are collected in a jet, such as, for example, an air gun, and blown onto a take-up surface such as a roller or moving belt. In the melt blown process, air is ejected at the surface of the spinnerette which serves to simultaneously draw down and cool the bicomponent fibers as they are deposited on a take-up surface in the path of the cooling air.

Regardless of the type of procedure which is used, the bicomponent fibers can be partially melt drawn in a molten state, i.e. before solidification occurs, to help orient the polymer molecules. Melt drawdowns of up to about 1:1000 may be employed depending upon spinnerette die diameter and spinning velocity, preferably from about 1:10 to about 1:200, and especially 1:20 to 1:100.

Where the staple-forming process is employed, it may be desirable to cold draw the bicomponent fibers with conventional drawing equipment, such as, for example, sequential godets operating at differential speeds. The bicomponent fibers may also be heat treated or annealed by employing a heated godet. The bicomponent fibers may further be texturized, such as, for example, by crimping and cutting the bicomponent fibers to form staple. In the spun bonded or air jet processes, cold drawing of the solidified bicomponent fibers and texturizing is achieved in the air jet and by impact on the take-up surface, respectively. Similar texturizing is achieved in the melt blown process by the cooling fluid which is in shear with the molten polymer bicomponent fibers, and which may also randomly de-linearize the bicomponent fibers prior to their solidification.

The bicomponent fibers of the present disclosure can be manufactured in a concentric core-sheath configuration (co-axial configuration). In an additional embodiment, the bicomponent fibers can be manufactured in an eccentric core-sheath configuration. Other possible configurations for the bicomponent fibers also include 50/50 side-by-side, unequal side-by-side, segmented pie and "islands-in-the-sea" configuration, as are known in the art. The bicomponent fibers of the present disclosure can also have a core/sheath ratio of 80/20 to 40/60; for example, a core/sheath ratio of 80/20 to 40/60; or in the alternative, a core/sheath ratio of 70/30 to 40/60; or in the alternative, a core/sheath ratio of 75/25 to 40/60; or in the alternative, a core/sheath ratio of 70/30 to 50/50.

The bicomponent fibers according to the instant disclosure may have a denier per filament in the range of less than 50 g/9000 m. All individual values and subranges from less than 50 g/9000 m are included herein and disclosed herein; for example, the denier per filament can be from a lower limit of 0.1, 0.5, 1, 1.6, 1.8, 2.0. 2.2, 2.4, 5, 10, 15, 17, 20, 25, 30, 33, 40, or 44 g/9000 m to an upper limit of 0.5, 1, 1.7, 1.8, 1.9, 2.0, 2.1, 2.2, 2.3, 2.4, 5, 10, 15, 17, 20, 25, 30, 33, 40, 44, or 50 g/9000 m. For example, the bicomponent fibers may have a denier per filament in the range of less than 40 g/9000 m; or in the alternative, the bicomponent fibers may have a denier per filament in the range of from 0.1 to 10 g/9000 m; or in the alternative, the bicomponent fibers may have a denier per filament in the range of from 1 to 5 g/9000 m; or in the alternative, the bicomponent fibers may have a denier per filament in the range of from 0.1 to 5 g/9000 m; or in the alternative, the bicomponent fibers may have a denier per filament in the range of from 0.1 to 2.6 g/9000 m; or in the alternative, the bicomponent fibers may have a denier per filament in the range of from 1 to 3 g/9000 m; or in the alternative, the bicomponent fibers may have a denier per filament in the range of from 1 to 2.5 g/9000 m; or in the alternative, the bicomponent fibers may have a denier per filament in the range of from 1.5 to 3 g/9000 m; or in the alternative, the bicomponent fibers may have a denier per filament in the range of from 1.6 to 2.4 g/9000 m.

The nonwoven products described above may be used in many articles such as hygiene products including, but not limited to, diapers, feminine care products, and adult incontinent products. The nonwoven products may also be used in medical products such as sterile wrap, isolation gowns, operating room gowns, surgical gowns, surgical drapes, first aid dressings, and other disposable items.

### Examples

### Materials

Eastman^{™} Polyester F61HC (PET-A) - Polyethylene terephthalate (a condensation polymer) available from Eastman Chemical Company.

Achieve^{™} 3854 (ExxonMobil). A polypropylene homopolymer having a melt Index (I₂) of 24 measured at 230 °C/2.16 kg, g/10 min according to ASTM D 1238. Density of 0.900 g/cm³ as reported by ExxonMobil.

Fusabond^{®} P353 (DuPont). A maleic anhydride modified polypropylene copolymer having a melt Index (I₂) of 22.4 measured at 230 °C/2.16 kg, g/10 min according to ASTM D 1238. Density of 0.904 g/cm³ measured according to ASTM D 792.

Sodium Bisulfate (Sigma Aldrich). An inorganic Brønsted-Lowry acid having a pKa at 25 °C of 2 in an aqueous system.

### Fiber Spinning

Prepare the bicomponent fibers of the Examples and Comparative Examples provided herein according to the information provided in Table 1, below. For Example 1, form a masterbatch mix with the catalyst (sodium bisulfate) and mineral oil and blend with the polymer (Fusabond^{®} P353) of the polypropylene blend (Table 1) to facilitate surface adhesion of the catalyst to the polyolefin pellets. Add the masterbatch to provide 20 wt.% of the polypropylene blend to the Achieve^{™} 3854 as seen in the amounts shown in Table 1. Final blend composition was used directly on fiber spinning line.

Each of the bicomponent fibers of the Examples and Comparative Examples has a core/sheath configuration using PET as the core and the polypropylene blend as shown in Table 1 as the sheath. The bicomponent fibers of the Example and Comparative Examples were handled and prepared in the same manner.

Produce the bicomponent fibers on a bicomponent spinning installation with a concentric cross-section having the PET as the core and the polypropylene blend as shown in Table 1 as the sheath. Mix the components of the polypropylene blend in the sheath extruder. The total throughput, at a core/sheath ratio of 40/60, was 0.6 gram per hole per minute (GHM), hole size (core) of 0.6 mm, and a length to diameter ratio of 4.

Maintain the sheath extruder melt temperature at 240 °C and the core extruder melt temperature at 290 °C. Quench the bicomponent filaments with air at 15 °C. Set the quench ratio to 60 % at 1019 cubic metre/hr (600 cfm). Adjust the draw ratio to maximum pressure handle in the slot before fiber break. The filament speed seen in Table 1 are maximum filament speed values above which the filament breaks.

**Table 1 -**

| | Condensation Polymer (Core) | Polypropylene Blend (Sheath) | Core-Sheath ratio | Denier | Filament speed (m/min) |
|---|---|---|---|---|---|
| Comp Ex. A | F61HC PET | Achieve^{™} 3854 | 40/60 | 1.63 | 3300 |
| Comp Ex. B | F61HC PET | Achieve^{™} 3854 + 20 wt.%¹ Fusabond^{®} P353 | 40/60 | 1.51 | 3580 |
| Ex. 1 | F61HC PET | Achieve^{™} 3854 + 20 wt.%¹ Fusabond^{®} P353 + 400 ppm Sodium Bisulfate | 40/60 | 1.42 | 3800 |

| | | | | | |
|---|---|---|---|---|---|
| ¹ Weight percent (wt.%) based on total weight of Polypropylene blend, where the components identified in Table 1 for each Comparative Example and Example total 100 wt.%. | | | | | |

The data shown in Table 1 indicate that the polypropylene blend of the present disclosure can achieve a higher filament speed as compared to polypropylene blends that do not include all the components of the polypropylene blend according to the present disclosure. In addition, as seen in Table 1 in addition to a higher filament speed, the polypropylene blend of the present disclosure also helps to achieve a fiber with a lower denier value as compared to polypropylene blends that do not include all the components of the polypropylene blend according to the present disclosure.

## Claims

1. A bicomponent fiber, comprising:
a first region formed of a condensation polymer; and
a second region formed from a polypropylene blend of:
(i) a propylene-based polymer having a density of 0.895 g/cm³ to 0.920 g/cm³ and a melt index, I₂, as determined by ASTM D1238 at 230 °C and 2.16 kg of 0.5 to 150 g/10 minutes;
(ii) a maleic anhydride-grafted polypropylene; and
(iii) an inorganic Brønsted-Lowry acid having an acid strength pKa value at 25 °C of 1 to 6.5, wherein the polypropylene blend has a 0.03 to 0.3 weight percent of grafted maleic anhydride based on the total weight of the polypropylene blend.

2. The bicomponent fiber of claim 1, wherein the first region is a core region of the bicomponent fiber and the second region is a sheath region of the bicomponent fiber, where the sheath region surrounds the core region.

3. The bicomponent fiber of any one of claims 1-2, wherein the condensation polymer is selected from the group consisting of polyethylene terephthalate, polyethylene terephthalate glycol-modified, polybutylene terephthalate, polylactic acid, polytrimethylene terephthalate, polyethylene 2,5-furandicarboxylate, polyhydroxybutyrate, polyamide and combinations thereof; or
wherein the condensation polymer comprises at least 75 weight percent (wt.%) of the first region, wherein the wt.% is based on the total weight of the first region.

4. The bicomponent fiber of claims 1 -2, wherein the condensation polymer is selected from the group consisting of polyethylene terephthalate, polyethylene terephthalate glycol-modified, polybutylene terephthalate and combinations thereof.

5. The bicomponent fiber of claim 1, wherein the propylene-based polymer is selected from a homopolymer, a block-copolymer, a random copolymer and combinations thereof.

6. The bicomponent fiber of any one of claims 1-5, wherein the maleic anhydride-grafted polypropylene has 0.05 to 3 wt.% of grafted maleic anhydride based on the total weight of the maleic anhydride-grafted polypropylene.

7. The bicomponent fiber of claim 6, wherein the maleic anhydride-grafted polypropylene has a density in a range of 0.899 g/cm³ to 0.914 g/cm³ and a melt index, I₂, as determined by ASTM D1238 at 230 °C and 2.16 kg of 20 to 25 g/10 minutes;

8. The bicomponent fiber of claim 1, wherein the inorganic Brønsted-Lowry acid is selected from the group consisting of sodium bisulfate monohydrate, phosphoric acid and combinations thereof; or
wherein the inorganic Brønsted-Lowry acid has a pKa of 2 to 6.

9. The bicomponent fiber of claim 1, wherein the polypropylene blend includes 5 to 75 wt.% of the propylene-based polymer, 2 to 30 wt.% of the maleic anhydride-grafted polypropylene, and 20 to 10000 parts-per-million of the inorganic Brønsted-Lowry acid; or
wherein the polypropylene blend includes at least 75 wt.% of the propylene-based polymer, wherein the maleic anhydride-grafted polypropylene and the inorganic Brønsted-Lowry acid are present with the propylene-based polymer to provide 100 wt.% of the polypropylene blend.

10. The bicomponent fiber of any one of claims 1 to 9, wherein the polypropylene blend further includes a polar saturated fatty acid having a 12 to 21 carbon chain.

11. The bicomponent fiber of claim 10, wherein the polar saturated fatty acid is stearic acid.

12. A nonwoven article comprising the bicomponent fiber of any one of claims 1-11.

13. A method of forming a bicomponent fiber, comprising:
coextruding under thermally bonding conditions (a) a condensation polymer and (b) a polypropylene blend of:
(i) a propylene-based polymer having a density of 0.895 g/cm³ to 0.920 g/cm³ and a melt index, I₂, as determined by ASTM D1238 at 230 °C and 2.16 kg of 0.5 to 150 g/10 minutes;
(ii) a maleic anhydride-grafted polypropylene; and
(iii) an inorganic Brønsted-Lowry acid having an acid strength pKa value at 25 °C of 1 to 6.5, wherein the polypropylene blend has a 0.03 to 0.3 weight percent of grafted maleic anhydride based on the total weight of the polypropylene blend, where the condensation polymer and the polypropylene blend are contacted under thermally bonding conditions to form the bicomponent fiber having a first region with the condensation polymer and a second region with the polypropylene blend.

14. The method of claim 13, wherein the bicomponent fiber is prepared by coextruding (a) and (b) in a sheath/core configuration, and wherein (a) is selected from the group consisting of polyethylene terephthalate, polyethylene terephthalate glycol-modified, polybutylene terephthalate, polylactic acid, polytrimethylene terephthalate, polyethylene 2,5-furandicarboxylate, polyhydroxybutyrate, polyamide and combinations thereof, and
wherein the maleic anhydride-grafted polypropylene of the polypropylene blend has 0.05 to 3 wt.% of grafted maleic anhydride based on the total weight of the maleic anhydride-grafted polypropylene.

15. The method of any one of claims 13-14, wherein the polypropylene blend includes 5 to 75 wt.% of the propylene-based polymer, 2 to 30 wt.% of the maleic anhydride-grafted polypropylene, and 20 to 10000 parts-per-million of the inorganic Brønsted-Lowry acid; or
wherein the polypropylene blend further includes a polar saturated fatty acid having a 12 to 21 carbon chain; or
wherein the bicomponent fiber is formed under melt blown, spunbond or staple fiber manufacturing process conditions.

## Patentansprüche

1. Eine zweikomponentige Faser, die Folgendes beinhaltet:
eine erste Region, die aus einem Kondensationspolymer gebildet ist; und
eine zweite Region, die aus einer Polypropylenmischung von Folgendem gebildet ist:
(i) einem Polymer auf Propylenbasis mit einer Dichte von 0,895 g/cm³ bis 0,920 g/cm³ und einem Schmelzindex, I₂, wie bestimmt nach ASTM D1238 bei 230 °C und 2,16 kg, von 0,5 bis 150 g/10 Minuten;
(ii) einem mit Maleinsäureanhydrid gepfropften Polypropylen; und
(iii) einer anorganischen Brønsted-Lowry-Säure mit einem pKa-Wert der Säurestärke bei 25 °C von 1 bis 6,5, wobei die Polypropylenmischung bezogen auf das Gesamtgewicht der Polypropylenmischung zu 0,03 bis 0,3 Gewichtsprozent gepfropftes Maleinsäureanhydrid aufweist.

2. Zweikomponentige Faser gemäß Anspruch 1, wobei die erste Region eine Kernregion der zweikomponentigen Faser ist und die zweite Region eine Mantelregion der zweikomponentigen Faser ist, wobei die Mantelregion die Kernregion umgibt.

3. Zweikomponentige Faser gemäß einem der Ansprüche 1-2, wobei das Kondensationspolymer aus der Gruppe ausgewählt ist, die aus Polyethylenterephthalat, glykolmodifiziertem Polyethylenterephthalat, Polybutylenterephthalat, Polymilchsäure, Polytrimethylenterephthalat, Polyethylen-2,5-furandicarboxylat, Polyhydroxybutyrat, Polyamid und Kombinationen davon besteht; oder
wobei das Kondensationspolymer zu mindestens 75 Gewichtsprozent (Gew.-%) die erste Region beinhaltet, wobei sich die Gew.-% auf das Gesamtgewicht der ersten Region beziehen.

4. Zweikomponentige Faser gemäß den Ansprüchen 1-2, wobei das Kondensationspolymer aus der Gruppe ausgewählt ist, die aus Polyethylenterephthalat, glykolmodifiziertem Polyethylenterephthalat, Polybutylenterephthalat und Kombinationen davon besteht.

5. Zweikomponentige Faser gemäß Anspruch 1, wobei das Polymer auf Propylenbasis aus einem Homopolymer, einem Blockcopolymer, einem statistischen Copolymer und Kombinationen davon ausgewählt ist.

6. Zweikomponentige Faser gemäß einem der Ansprüche 1-5, wobei das mit Maleinsäureanhydrid gepfropfte Polypropylen bezogen auf das Gesamtgewicht des mit Maleinsäureanhydrid gepfropften Polypropylens zu 0,05 bis 3 Gew.-% gepfropftes Maleinsäureanhydrid aufweist.

7. Zweikomponentige Faser gemäß Anspruch 6, wobei das mit Maleinsäureanhydrid gepfropfte Polypropylen eine Dichte in einem Bereich von 0,899 g/cm³ bis 0,914 g/cm³ und einen Schmelzindex, I₂, wie bestimmt nach ASTM D1238 bei 230 °C und 2,16 kg, von 20 bis 25 g/10 Minuten aufweist.

8. Zweikomponentige Faser gemäß Anspruch 1, wobei die anorganische Brønsted-Lowry-Säure aus der Gruppe ausgewählt ist, die aus Natriumbisulfatmonohydrat, Phosphorsäure und Kombinationen davon besteht; oder
wobei die anorganische Brønsted-Lowry-Säure einen pKa-Wert von 2 bis 6 aufweist.

9. Zweikomponentige Faser gemäß Anspruch 1, wobei die Polypropylenmischung zu 5 bis 75 Gew.-% das Polymer auf Propylenbasis, zu 2 bis 30 Gew.-% das mit Maleinsäureanhydrid gepfropfte Polypropylen und zu 20 bis 10 000 Teile pro Million die anorganische Brønsted-Lowry-Säure umfasst; oder
wobei die Polypropylenmischung zu mindestens 75 Gew.-% das Polymer auf Propylenbasis umfasst, wobei das mit Maleinsäureanhydrid gepfropfte Polypropylen und die anorganische Brønsted-Lowry-Säure mit dem Polymer auf Propylenbasis vorhanden sind, um 100 Gew.-% der Polypropylenmischung bereitzustellen.

10. Zweikomponentige Faser gemäß einem der Ansprüche 1 bis 9, wobei die Polypropylenmischung ferner eine polare gesättigte Fettsäure mit einer Kohlenstoffkette von 12 bis 21 Kohlenstoffen umfasst.

11. Zweikomponentige Faser gemäß Anspruch 10, wobei die polare gesättigte Fettsäure Stearinsäure ist.

12. Ein nicht gewebter Artikel, der die zweikomponentige Faser gemäß einem der Ansprüche 1-11 beinhaltet.

13. Ein Verfahren zum Bilden einer zweikomponentigen Faser, das Folgendes beinhaltet:
Koextrudieren unter thermisch bindenden Bedingungen von (a) einem Kondensationspolymer und (b) einer Polypropylenmischung von Folgendem:
(i) einem Polymer auf Propylenbasis mit einer Dichte von 0,895 g/cm³ bis 0,920 g/cm³ und einem Schmelzindex, I₂, wie bestimmt nach ASTM D1238 bei 230 °C und 2,16 kg, von 0,5 bis 150 g/10 Minuten;
(ii) einem mit Maleinsäureanhydrid gepfropften Polypropylen; und
(iii) einer anorganischen Brønsted-Lowry-Säure mit einem pKa-Wert der Säurestärke bei 25 °C von 1 bis 6,5, wobei die Polypropylenmischung bezogen auf das Gesamtgewicht der Polypropylenmischung zu 0,03 bis 0,3 Gewichtsprozent gepfropftes Maleinsäureanhydrid aufweist, wobei das Kondensationspolymer und die Polypropylenmischung unter thermisch bindenden Bedingungen in Kontakt gebracht werden, um die zweikomponentige Faser zu bilden, die eine erste Region mit dem Kondensationspolymer und eine zweite Region mit der Polypropylenmischung aufweist.

14. Verfahren gemäß Anspruch 13, wobei die zweikomponentige Faser durch Koextrudieren von (a) und (b) in einer Mantel-Kern-Konfiguration hergestellt wird und wobei (a) aus der Gruppe ausgewählt ist, die aus Polyethylenterephthalat, glykolmodifiziertem Polyethylenterephthalat, Polybutylenterephthalat, Polymilchsäure, Polytrimethylenterephthalat, Polyethylen-2,5-furandicarboxylat, Polyhydroxybutyrat, Polyamid und Kombinationen davon besteht, und
wobei das mit Maleinsäureanhydrid gepfropfte Polypropylen der Polypropylenmischung bezogen auf das Gesamtgewicht des mit Maleinsäureanhydrid gepfropften Polypropylens zu 0,05 bis 3 Gew.-% gepfropftes Maleinsäureanhydrid aufweist.

15. Verfahren gemäß einem der Ansprüche 13-14, wobei die Polypropylenmischung zu 5 bis 75 Gew.-% das Polymer auf Propylenbasis, zu 2 bis 30 Gew.-% das mit Maleinsäureanhydrid gepfropfte Polypropylen und zu 20 bis 10 000 Teile pro Million die anorganische Brønsted-Lowry-Säure umfasst; oder
wobei die Polypropylenmischung ferner eine polare gesättigte Fettsäure mit einer Kohlenstoffkette von 12 bis 21 Kohlenstoffen umfasst; oder
wobei die zweikomponentige Faser unter Bedingungen eines Schmelzblas-, Spinnvlies- oder Stapelfaser-Fertigungsprozesses gebildet wird.

## Revendications

1. Une fibre à deux composants, comprenant :
une première région formée en un polymère de condensation ; et
une deuxième région formée à partir d'un mélange de polypropylène constitué de :
(i) un polymère à base de propylène ayant une masse volumique de 0,895 g/cm³ à 0,920 g/cm³ et un indice de fluidité à chaud, I₂, tel que déterminé par l'ASTM D1238 à 230 °C et 2,16 kg de 0,5 à 150 g/10 minutes ;
(ii) un polypropylène greffé à l'anhydride maléique ; et
(iii) un acide de Brønsted-Lowry inorganique ayant une valeur de force acide pKa à 25 °C de 1 à 6,5, où le mélange de polypropylène a un pourcentage en poids d'anhydride maléique greffé de 0,03 à 0,3 rapporté au poids total du mélange de polypropylène.

2. La fibre à deux composants de la revendication 1, où la première région est une région de cœur de la fibre à deux composants et la deuxième région est une région de gaine de la fibre à deux composants, la région de gaine entourant la région de cœur.

3. La fibre à deux composants de l'une quelconque des revendications 1 à 2, où le polymère de condensation est sélectionné dans le groupe constitué de polytéréphtalate d'éthylène, polytéréphtalate d'éthylène modifié au glycol, polytéréphtalate de butylène, acide polylactique, polytéréphtalate de triméthylène, polyéthylène 2,5-furandicarboxylate, polyhydroxybutyrate, polyamide et de combinaisons de ceux-ci ; ou où le polymère de condensation constitue au moins 75 pour cent en poids (% en poids) de la première région, où le % en poids est rapporté au poids total de la première région.

4. La fibre à deux composants des revendications 1 à 2, où le polymère de condensation est sélectionné dans le groupe constitué de polytéréphtalate d'éthylène, polytéréphtalate d'éthylène modifié au glycol, polytéréphtalate de butylène et de combinaisons de ceux-ci.

5. La fibre à deux composants de la revendication 1, où le polymère à base de propylène est sélectionné parmi un homopolymère, un copolymère en blocs, un copolymère statistique et des combinaisons de ceux-ci.

6. La fibre à deux composants de l'une quelconque des revendications 1 à 5, où le polypropylène greffé à l'anhydride maléique a 0,05 à 3 % en poids d'anhydride maléique greffé rapporté au poids total du polypropylène greffé à l'anhydride maléique.

7. La fibre à deux composants de la revendication 6, où le polypropylène greffé à l'anhydride maléique a une masse volumique comprise dans un intervalle allant de 0,899 g/cm³ à 0,914 g/cm³ et un indice de fluidité à chaud, I₂, tel que déterminé par l'ASTM D1238 à 230 °C et 2,16 kg de 20 à 25 g/10 minutes.

8. La fibre à deux composants de la revendication 1, où l'acide de Brønsted-Lowry inorganique est sélectionné dans le groupe constitué de bisulfate de sodium monohydraté, d'acide phosphorique et de combinaisons de ceux-ci ; ou
où l'acide de Brønsted-Lowry inorganique a un pKa de 2 à 6.

9. La fibre à deux composants de la revendication 1, où le mélange de polypropylène inclut 5 à 75 % en poids du polymère à base de propylène, 2 à 30 % en poids du polypropylène greffé à l'anhydride maléique, et 20 à 10 000 parties-par-million de l'acide de Brønsted-Lowry inorganique ; ou
où le mélange de polypropylène inclut au moins 75 % en poids du polymère à base de propylène, où le polypropylène greffé à l'anhydride maléique et l'acide de Brønsted-Lowry inorganique sont présents avec le polymère à base de propylène afin d'obtenir 100 % en poids du mélange de polypropylène.

10. La fibre à deux composants de l'une quelconque des revendications 1 à 9, où le mélange de polypropylène inclut en sus un acide gras saturé polaire ayant une chaîne de 12 à 21 carbones.

11. La fibre à deux composants de la revendication 10, où l'acide gras saturé polaire est l'acide stéarique.

12. Un article non-tissé comprenant la fibre à deux composants de l'une quelconque des revendications 1 à 11.

13. Un procédé de formation d'une fibre à deux composants, comprenant :
la coextrusion dans des conditions de liage thermique de (a) un polymère de condensation et (b) un mélange de polypropylène constitué de :
(i) un polymère à base de propylène ayant une masse volumique de 0,895 g/cm³ à 0,920 g/cm³ et un indice de fluidité à chaud, I₂, tel que déterminé par l'ASTM D1238 à 230 °C et 2,16 kg de 0,5 à 150 g/10 minutes ;
(ii) un polypropylène greffé à l'anhydride maléique ; et
(iii) un acide de Brønsted-Lowry inorganique ayant une valeur de force acide pKa à 25 °C de 1 à 6,5, où le mélange de polypropylène a un pourcentage en poids d'anhydride maléique greffé de 0,03 à 0,3 rapporté au poids total du mélange de polypropylène, le polymère de condensation et le mélange de polypropylène étant mis en contact dans des conditions de liage thermique afin de former la fibre à deux composants ayant une première région avec le polymère de condensation et une deuxième région avec le mélange de polypropylène.

14. Le procédé de la revendication 13, où la fibre à deux composants est préparée par coextrusion de (a) et (b) dans une configuration gaine/cœur, et où (a) est sélectionné dans le groupe constitué de polytéréphtalate d'éthylène, polytéréphtalate d'éthylène modifié au glycol, polytéréphtalate de butylène, acide polylactique, polytéréphtalate de triméthylène, polyéthylène 2,5-furandicarboxylate, polyhydroxybutyrate, polyamide et de combinaisons de ceux-ci, et
où le polypropylène greffé à l'anhydride maléique du mélange de polypropylène a 0,05 à 3 % en poids d'anhydride maléique greffé rapporté au poids total du polypropylène greffé à l'anhydride maléique.

15. Le procédé de l'une quelconque des revendications 13 à 14, où le mélange de polypropylène inclut 5 à 75 % en poids du polymère à base de propylène, 2 à 30 % en poids du polypropylène greffé à l'anhydride maléique, et 20 à 10 000 parties-par-million de l'acide de Brønsted-Lowry inorganique ; ou
où le mélange de polypropylène inclut en sus un acide gras saturé polaire ayant une chaîne de 12 à 21 carbones ; ou
où la fibre à deux composants est formée dans des conditions de processus de fabrication par fusion-soufflage, de tissé-filé ou de fibres discontinues.
